Europäisches Patentamt

European Patent Office

Office européen des brevets

(11) Numéro de publication : **0 350 365 B1**

## (12) FASCICULE DE BREVET EUROPEEN

(45) Date de publication du fascicule du brevet :
**18.08.93 Bulletin 93/33**

(51) Int. Cl.$^5$ : **C04B 14/48, E01C 11/18**

(21) Numéro de dépôt : **89401794.6**

(22) Date de dépôt : **23.06.89**

(54) **Béton compacté renforcé de fibres et son utilisation.**

(30) Priorité : **08.07.88 FR 8809346**

(43) Date de publication de la demande :
**10.01.90 Bulletin 90/02**

(45) Mention de la délivrance du brevet :
**18.08.93 Bulletin 93/33**

(84) Etats contractants désignés :
**BE CH DE ES GB LI LU NL**

(56) Documents cités :
**EP-A- 0 017 548
EP-A- 0 273 181
FR-E- 13 793
GB-A- 2 139 547
CHEMICAL ABSTRACTS, vol. 100, 1984,
Columbus, OH (US); p. 303, no. 144069k**

(73) Titulaire : **SCREG ROUTES ET TRAVAUX
PUBLICS
1, avenue Eugène Freyssinet
F-78065 St Quentin-en-Yvelines Cédex (FR)**

(72) Inventeur : **Ficheroulle, Benoît
23 Av Balzac
94210 La Varenne St Hilaire (FR)**
Inventeur : **Serfass, Jean-Pierre
26 rue des Favorites
75015 Paris (FR)**

(74) Mandataire : **Polus, Camille et al
c/o Cabinet Lavoix 2, Place d'Estienne d'Orves
F-75441 Paris Cedex 09 (FR)**

EP 0 350 365 B1

## Description

La présente invention a pour objet un béton compacté renforcé de fibres, utilisable notamment pour la réalisation de dallages industriels.

Les bétons compactés, décrits notamment dans FR-A-2 432 490, ont été mis au point pour permettre une mise en service rapide de la chaussée, en obtenant, à dosage égal en liant, une qualité de béton au moins égale à celle des autres bétons utilisés dans le domaine routier. Aussi le dosage en ciment est, à performances mécaniques égales, généralement plus faible en béton compacté, 14% de ciment correspondant à un béton coulé à 350 kg de ciment/m³.

Les bétons compactés ont comme particularité essentielle par rapport aux bétons coulés classiques, une teneur en eau nettement plus réduite. Avec le béton compacté, cette teneur en eau plus faible apporte une portance suffisante pour mettre en oeuvre le matériau avec des engins routiers, afin de le compacter à l'aide de compacteurs vibrants et à pneus, et le remettre en circulation sans délai. Par contre la consistance du béton coulé est beaucoup plus plastique, et sa mise en oeuvre est faite avec des machines à coffrage glissant ou à la règle vibrante et ne permet pas la circulation avant la prise complète.

D'autre part, on trouve fréquemment des aciers d'armatures dans le béton coulé (treillis soudé ou fibres métalliques dans les dallages) alors que ce n'est absolument pas le cas pour le béton compacté, qui n'est donc jamais armé, même dans le cas d'utilisation en sols industriels.

Le Tableau I suivant résume les différences entre les 2 types de béton :

### TABLEAU I

|  | BETON COMPACTE | BETON COULE |
|---|---|---|
| -Teneur en eau | 5 à 7% maximum | plus de 8% en général |
| -Poids de ciment | 8 à 14% 190 à 350 kg/m³ de béton | 250 à 350 kg/m³ en chaussée et dallages |
| -Fabrication | Centrales de grave traitée - fabrication en continu ou dis-continu | Centrales de BPE* fabrication en dis-continu par gâchées |
| -Mise en oeuvre | Engins routiers | Machine à coffrage glissant ou règle vibrante |
| -Armatures pré-vues | Non | parfois Oui |
| -Remise en cir-culation | Immédiate | Après prise complète (de 7 à 28 jours) |

\* béton prêt à l'emploi

La présente invention a donc pour objet un béton compacté comprenant :

a) 7 à 15% en poids d'un ciment ou d'un liant routier

b) 4 à 7% en poids d'eau

c) 0,8 à 4% en poids de fibres métalliques, le reste étant constitué de

d) graves de 0 à 31,5 mm,

e) le cas échéant 0,05 à 2% en poids, par rapport au ciment, d'adjuvants des bétons, et

f) le cas échéant 5 à 20% en poids, par rapport au ciment, de cendres volantes ou d'ultrafines.

a) Le ciment utilisable selon l'invention est notamment un ciment du type CPA, CPJ, CLK ou CLC, en particulier des classes 45 ou 55, ou un ciment dit de haute résistance (HP) (cf. normes AFNOR NF P15-301).

On peut aussi utiliser un liant spécial routier tel que par exemple Rolac (de la société Lafarge), ARC (de Cedest), LH 38 (de Chaux et Ciment de St Hilaire), ROC (de Ciment d'Origny), etc... La proportion de 7 à 15% de ciment ou de liant correspond à environ 160 à 350 kg/m³ de béton.

b) La teneur en eau optimale est donnée par l'essai dit "Proctor modifié" et varie légèrement à chaque chantier suivant les matériaux utilisés et la formule retenue. 4 à 7% en poids correspond à environ 90 à 160 l/m³.

c) On peut utiliser selon l'invention de 0,8% à 4% en poids (soit environ 20 à 100 kg/m³) de fibres métalliques (surtout fibres d'acier ou de fonte ayant par ex. 2 à 8 cm de longueur), par exemple les fibres vendues par les Sociétés Harex, Bekaert (fibre Dramix), Eurosteel Silifiber, ou la fibre de fonte Pont à Mousson.

d) Les graves de 0 à 31,5 mm peuvent être choisis parmi sables et graviers calcaires, silico-calcaires, graves alluvionnaires et granulats de roches dures. La granulométrie préférée est 0/10, 0/14, ou 0/20 mm.

e) Les adjuvants pour bétons peuvent notamment être des plastifiants réducteurs d'eau, des fluidifiants, des entraîneurs d'air, des hydrofuges, des retardateurs de prise ou des "anti-gels" dans la composition desquels peuvent entrer les produits suivants : résines mélamines, naphtalène-sulfonates, lignosulfonates, alkylaryl-sulfonates, formaldéhyde, savons de résine ou d'abiétate alcalin, détergents synthétiques, carbohydrates, esters d'acides sulfoniques, sels d'éthanolamine, sulfonates d'alcool gras, savons alalins d'acides gras, acides phosphoriques-fluorhydrique-humique, glycérine, phosphates et fluorures, oxydes de zinc et de plomb, borax, acides et sels d'acides hydroxy-carboxyliques, hydrates de carbone, sels d'acides gras, sulfate d'alumine, colloïdes à base d'algues marines.

f) On peut utiliser des cendres volantes ou des ultrafines diverses telles que de la fumée de silice, des kaolinites, des argiles calcinées et autres ultrafines jouant le rôle de complément granulaire, améliorant la maniabilité et ayant éventuellement un effet pouzzolanique.

Le béton compacté selon l'invention est utilisable notamment pour les dallages industriels, mais aussi en chaussées routières ou aéronautiques, plate-formes et terre-pleins (portuaires, etc).

Il est fréquent que les surcharges imposent de dimensionner une dalle avec une armature en acier, soit par la solution classique du treillis soudé, soit par la technique plus récente des fibres métalliques introduites à la centrale de BPE (béton prêt à l'emploi) ou directement dans le camion malaxeur sur chantier.

Avec un treillis soudé, il n'est pas question d'utiliser un béton compacté, en raison d'une circulation impossible des engins sur le treillis maintenu à une hauteur correcte.

La caractéristique principale de l'invention consiste donc à introduire des fibres métalliques dans le béton compacté, de sorte à rendre le complexe béton + fibres apte à supporter les mêmes surcharges qu'un béton coulé classique, armé d'un treillis ou renforcé de fibres métalliques.

Le béton classique type BPE est fabriqué dans une centrale où la quantité nécessaire pour une gâchée d'aggrégats, de ciment, et éventuellement de fibres métalliques est introduite dans le malaxeur, puis l'approvisionnement s'arrête et le malaxage commence : il s'agit d'un fonctionnement discontinu. Par contre le béton compacté peut être fabriqué dans une centrale de grave traitée où les matériaux sont introduits en continu dans un malaxeur qui ne s'arrête pas. Il est donc nécessaire de doser avec précision l'introduction des fibres métalliques sur un tapis en continu, alors que dans une centrale discontinue le pesage est beaucoup plus simple.

La mise en oeuvre est faite ensuite au finisseur, ou avec tout autre engin d'épandage, elle est suivie du compactage, comme pour un béton compacté non armé. Les résistances mécaniques attendues sont au moins celles d'un béton coulé comportant le même dosage de fibres.

Les exemples suivants illustrent l'invention. Dans ces exemples rassemblés sur le Tableau II, les formules des bétons sont données en % en poids. Les résistances en flexion ont été mesurées sur des prismes 14x14x56 cm âgés de 28 jours. Les résistances en traction ("essai de fendage brésilien") ont été mesurées sur des éprouvettes cylindriques 16 x 32cm vibrocompressées âgées de 28 jours.

## Tableau II

Résistances obtenues sur des bétons compactés avec et sans fibres métalliques.

| Exemples N° | 1 | 2 | 3 |
|---|---|---|---|
| 4/10 silico-calcaire | 49 | 58 | 58 |
| 0/4 silico-calcaire | 26 | 15 | 17 |
| 0/2 quartzite | 13 | 13 | 13 |
| CPJ 45 | 12 | | |
| CPA 55 | | 12 | 14 |
| Fibres Harex ($kg/m^3$ de béton) | 30* | 30* | 30* |
| Eau % (PPC) | 7 | 7 | 7 |
| Résistance en flexion à 28 jours sur prisme 14x14x56 cm (MPa) | 6,6 | 7,8 | 8,1 |
| Comparaison avec la résistance de bétons témoins sans fibres (MPa) | 5,9 | 6,8 | 7,2 |

* soit 1,2%

## Tableau II (suite)

| Exemples N° | 4 | 5 | 6 | 7 |
|---|---|---|---|---|
| 10/14 concassé silico-calcaire (GEM région de Lyon) | 23,1 | 23,1 | 23,1 | 23,1 |
| 4/10 concassé silico-calcaire GEM | 24,3 | 24,3 | 24,3 | 24,3 |
| 0/4 broyé GEM | 40,6 | 40,6 | 40,6 | 40,6 |
| CPJ 45 | 12 | 12 | 12 | 12 |
| Fumée de silice PECHINEY (en % du poids de ciment) | | 10 | | 10 |
| Fludifiant Sikafluid** (en % du poids de ciment et en extrait sec) | | | 1,8 | 1,8 |
| Fibres acier Harex (kg/m$^3$ de béton) | 30 | 30 | 30 | 30 |
| Eau % (PPC) | 5,0 | 6,0 | 4,5 | 4,0 |
| Résistance en traction brsilien sur éprouvettes cylindriques 16x32 cm à 28 j (MPa) | 3,9 | 4,8 | 4,9 | 7,2 |
| Résistance en flexion à 28 j (MPa) | 6,5 | 8 | 8,2 | 12 |
| Comparaison avec la résistance en flexion de bétons témoins sans fibres (MPa) | 6,1 | 7,5 | 7,7 | 10,8 |

** fabriqué par la Société SIKA.

Exemple N° 8

```
formule :

0/6 calcaire .............. 30%

6/20 calcaire ............ 57%

Ciment CPA 55 ........... 8%

Cendres silico-alumineuses.. 5%

Eau ..................... 6%

Fibres d'acier Dramix-Bekaert: 20kg/m³ de

                 béton (soit 0,9% du béton)

Résistance en flexion à 28 j : 5,4 MPa
```

Exemple N° 9

```
formule :

0/6 diorite ............. 36%

6/10 diorite ........... 50%

Ciment hautes performances.. 14%

Eau .................... 4%

Fibres de fonte : 80 kg/m³ de béton

(de Pont à Mousson) (soit 3,2% du béton)

Fumée de silice : 10% du poids de ciment

Fluidifiant Sikafluid : 2% en poids de

                 ciment en extrait sec

Résistance en flexion à 28 j : 13,2 MPa
```

Intérêt des fibres métalliques dans le béton

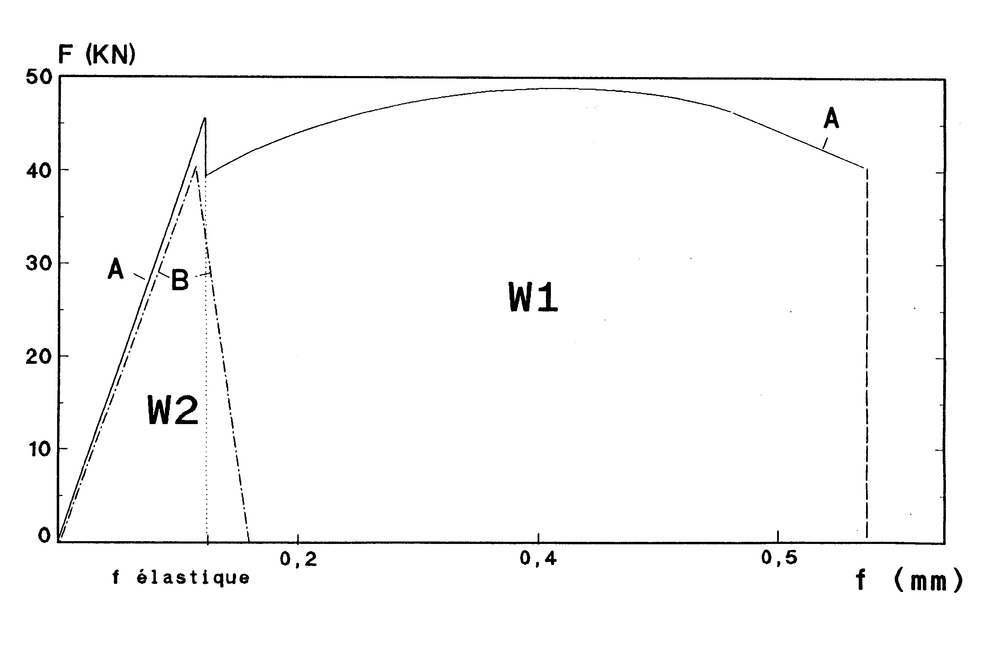

L'intérêt des fibres métalliques est illustré par la courbe effort-déformation F/f de la figure annexée : la courbe A correspond à l'exemple 2 avec fibres et la courbe B à l'exemple comparatif sans fibres. Les résistances sont mesurées par l'essai de flexion normalisé (NF P 18 407) sur des barreaux 14x14x56 cm, mais en augmentation de déformation constante, et non de force. F est la force exercée par la presse et f la flèche. La résistance en flexion est donnée par :

$$R_F \ (MPa) \ = \ \frac{30\,F}{a^2} \qquad (avec \ a \ = \ 14 \ cm)$$

On voit sur cette courbe et sur les valeurs obtenues dans les exemples 1 à 7, que les fibres métalliques n'apportent pas un gain de résistance important avant l'apparition de la première fissure du béton (de 10 à 20% par rapport au béton non armé). Par contre l'intérêt des fibres apparaît après la rupture de la matrice du béton, avec les caractéristiques suivantes pour le matériau avec et sans fibres :

- béton non armé (exemple comparatif) : la rupture est de type fragile et se produit dès la première fissuration du béton; la contrainte passe par un maximum et décroît immédiatement;
- béton armé de 30 kg/m³ de fibres d'acier (Exemple n° 2) : après la rupture du béton, les fibres jouent un rôle de couture des bords de la fissure, et leur ancrage dans le béton permet une reprise de la résistance du matériau; la courbe effort-déformation passe par un maximum, puis décroît légèrement avant de montrer une reprise en forme de plateau plus ou moins élevé ou prolongé suivant le type de fibres utilisé.

L'énergie globale nécessaire pour obtenir la séparation franche des deux bords de la fissure est beaucoup plus importante avec fibres (énergie $W_1$) que sans fibres (énergie $W_2$). Le béton de fibres présente un comportement mécanique du type ductile, même dans le cas de l'utilisation de bétons à hautes performances contenant des fumées de silice (exemples 8 à 10); par contre le béton non armé présente dans tous les cas un comportement du type fragile. La conséquence de ce phénomène est une très bonne tenue des dallages industriels en béton renforcé de fibres : mêmes en cas de surcharge accidentelle, et par là de fissuration du béton, les bords de la fissure ne s'écartent pas.

Les fibres métalliques apportent au béton compacté un certain nombe d'avantages par rapport au treillis soudé employé dans le béton coulé :

- une répartition plus homogène des armatures obtenue par la position aléatoire des fibres dans la matrice du béton, et une sécurité plus grande sur les performances du dallage si on compare avec un treillis soudé positionné en hauteur de façon plus ou moins précise dans la dalle;
- la possibilité de réduire l'épaisseur de béton d'environ 20% par rapport à une dalle armée d'une nappe de treillis (suivant le type de treillis utilisé avec 2 nappes on retrouve généralement une épaisseur de béton comparable);
- la réduction de la fissuration du béton, et la possibilité de multiplier par un facteur supérieur à 4 la taille des surfaces sans joint, d'où une limitation du nombre de points faibles de l'ouvrage.

Les fibres métalliques apportent, comme le treillis soudé, une liaison mécanique entre dalles au niveau des joints (ou des fissures), ce qui évite le battement des dalles caractéristiques du béton non armé au passage des charges;

Exemples d'applications des bétons selon l'invention :

- Dallage industriel de 18 cm d'épaisseur renforcé de fibres.

Les granulats utilisés sont d'une granulométrie 0/14 et le liant un ciment CPJ 45 dosé à 12% (280 kg/m$^3$ de béton). Le béton a été renforcé, à raison de 30 kg de fibres d'acier au m$^3$, et sa surface est r-couverte d'une chape d'usure de 10 mm d'épaisseur. Ce dallage est amené à supporter des étagères de stockage et des chariots à bandage.

- Renforcement d'une dalle de béton existante

Les aggrégats sont des granulats durs 0/10, et le liant un ciment hautes performances; on utilise de la fumée de silice comme additif, ainsi qu'un superfludifiant dans l'eau de gâchage. Le béton est renforcé de fibres de fonte à raison de 70 kg/m$^3$. Le renforcement a une épaisseur de 5 cm, et il est collé sur une dalle de béton existante.

La structure ainsi renforcée peut permettre le trafic d'avions plus lourds, en évitant la démolition de la dalle existante et la reconstruction d'une dalle plus épaisse.

## Revendications

1. Béton compacté comprenant :
   a) 7 à 15% en poids d'un ciment ou d'un liant routier
   b) 4 à 7% en poids d'eau
   c) 0,8 à 4% en poids de fibres métalliques,
   le reste étant constitué de
   d) graves de 0 à 31,5 mm,
   e) le cas échéant 0,05 à 2% en poids, par rapport au ciment, d'adjuvants des bétons, et
   f) le cas échéant 5 à 20% en poids, par rapport au ciment, de cendres volantes ou d'ultrafines.

2. Béton compacté selon la revendication 1, caractérisé en ce que le composant a) est un ciment du type CPA, CPJ ou CLK ou CLC des classes 45 ou 55.

3. Béton compacté selon la revendication 1, caractérisé en ce que les fibres métalliques sont des fibres d'acier ou de fonte.

4. Béton compacté selon l'une des revendications 1 ou 3, caractérisé en ce que les graves sont des graviers 0/10, 0/14 ou 0/20 mm.

5. Utilisation du béton compacté selon l'une quelconque des revendications 1 à 4 pour la réalisation de dallages industriels, terre-pleins, chaussées routières ou aéronautiques.

## Patentansprüche

1. Verdichteter Beton, umfassend:
   a) 7 bis 15 Gew.-% eines Zements oder eines Binders für Straßen;
   b) 4 bis 7 Gew.-% Wasser;
   c) 0,8 bis 4 Gew.-% Metallfasern;
   wobei sich der Rest zusammensetzt aus
   d) Kiessande mit 0 bis 31,5 mm;
   e) gegebenenfalls 0,05 bis 2 Gew.-%, bezogen auf den Zement, Betonzuschläge und
   f) gegebenenfalls 5 bis 20 Gew.-%, bezogen auf den Zement, Flug- oder ultrafeine Aschen.

2. Verdichteter Beton nach Anspruch 1, dadurch gekennzeichnet, daß es sich bei dem Bestandteil a) um einen Zement des Typs CPA, CPJ oder CLK oder CLC der Klassen 45 oder 55 handelt.

3. Verdichteter Beton nach Anspruch 1, dadurch gekennzeichnet, daß es sich bei den Metallfasern um Fasern aus Stahl oder Guß handelt.

4. Verdichteter Beton nach einem der Ansprüche 1 oder 3, dadurch gekennzeichnet, daß es sich bei den Kiessanden um Kiese mit 0/10, 0/14 oder 0/20 mm handelt.

5. Verwendung des verdichteten Betons nach irgendeinem der Ansprüche 1 bis 4 zur Herstellung von industriellen Plattenbelägen, Aufschüttungen, Straßenfahrbahnen oder Flugzeugrollbahnen.

## Claims

1. Compacted concrete comprising:-
   a) 7 to 15% weight in cement or road binding material
   b) 4 to 7% weight in water
   c) 0.8 to 4% weight in metallic fibres.
   the remainder comprising:-
   d) gravel of 0 to 31.5 mm,
   e) the case arising, 0.05 to 2% weight in cement additives in relation to the cement and
   f) the case arising, 5 to 20% weight in loose or ultra-fine ash in relation to the cement,

2. Compacted concrete according to claim 1 in that component a) is a cement of the type CPA, CPJ, or CLK or CLC of classes 45 or 55.

3. Compacted concrete according to claim 1 in that the metallic fibres are steel or cast fibres.

4. Compacted fibres according to one of claims 1 or 3 in that the gravel has grit of 0/10, 0/14 or 0/20 mm.

5. Use of compacted concrete according to any of claims 1 to 4 manufacture industrial flagging, road beds, roas or aeronautical routes.